# EUROPEAN PATENT APPLICATION

(11) **EP 4 116 120 A1**
(43) Date of publication of application: **11.01.2023**
(21) Application number: 21184584.7
(22) Date of filing: 08.07.2021
(51) Int. Cl.: B60H 1/22

(54) **ELECTRIC HEATING DEVICE, IN PARTICULAR FOR AN ELECTRIC VEHICLE**

(71) Applicant: MAHLE International GmbH, 70376 Stuttgart (DE)
(72) Inventor: BÖGERSHAUSEN, Stefan, 70347 Stuttgart (DE); Espin, Francisco González, 46185 La Pobla de Vallbona (ES); HALLBERG, Torbjorn, 46023 Valencia (ES); HÜLSS, Marcel, 70563 Stuttgart (DE); VIEHRIG, Falk, 70376 Stuttgart (DE); WALTER, Christoph, 70469 Stuttgart (DE); WANKE, Robin, 70569 Stuttgart (DE); Waßmer, Emma, 64295 Darmstadt (DE)
(74) Representative: BRP Renaud & Partner mbB Rechtsanwälte Patentanwälte Steuerberater

(57) **Abstract**

The invention relates to an electrical heating device (1) having a substrate (2) on which an electrical conduction path (3) is arranged which extends from a first electrical conduction path terminal (4a) to a second electrical conduction path terminal (4b), wherein the conductive path (3) is formed of an electrically conductive thick film material (DFM) at least in a thick film conductive path portion (5), wherein the at least one thick film conductive path portion (5) extends rectilinearly in a plan view of the substrate (2).

## Description

The invention relates to an electric heating device, in particular for a motor vehicle.

In motor vehicles with purely electric drive, the waste heat generated by an internal combustion engine during operation is not available. Heat - for example to heat the interior of the motor vehicle - must therefore be generated by other means. Electrical heating devices, in particular so-called PTC heaters, are known. Such PTC heaters have an electrical resistance that also increases with increasing temperature. The increase in electrical resistance is accompanied by a decrease in electrical current through the heater. The PTC property of the heater thus has a self-regulating effect and prevents the PTC heater from heating up too much. However, this limits the maximum temperature that can be reached by the PTC heater. Typical maximum heating temperatures are about 200°C.

It is therefore known from the prior art to use so-called thick film technology ("TFR"). This means that a film with a certain film thickness made of a so-called thick film material is applied to a substrate - such as a printed circuit board or the like - and forms an electrical conduction path that can be electrically energized. The so-called thick-film materials that are suitable for this purpose also have an electrical resistance that increases with increasing temperature. However, thick-film materials lack the self-regulating property mentioned above, so that these materials can reach much higher temperatures - up to 400°C, for example. A heater using TFR technology thus achieves significantly higher heating powers than a pure PTC heater.

A disadvantage is that local "hotspots", i.e. local zones with particularly high temperatures, can occur in the conduction path formed by the thick film. In practice, these hotspots occur particularly frequently at points in the conductive path where it is curved or has a kink or a curved contour. In extreme cases, a too high temperature in these zones can result in damage or even destruction of the thick film, so that the electrical conduction path is interrupted and, as a result, heating power can no longer be generated.

It is therefore an object of the present invention to provide an improved embodiment for an electrical heating device in which the above-described problem no longer occurs.

This object is solved by the subject matter of the independent patent claims. Preferred embodiments are the subject matter of the dependent patent claims.

Accordingly, the basic idea of the invention is to realize the electrical conduction path of the electrical heating device described at the beginning only in conduction path sections with the aid of thick-film technology, in which the electrical conduction path has a straight-line contour. In contrast, in sections of the conductive path in which the conductive path is not straight, i.e. curved or curved or with a kink, it can be designed in the conventional manner, i.e. using a conventional electrically conductive material. In this way, the undesirable formation of hot spots mentioned above can be avoided.

An electrical heating device according to the invention, in particular for an electric vehicle, i.e. a vehicle with a purely electric drive, comprises a substrate on which an electrical conduction path is arranged which can be electrically energized and for this purpose extends on the substrate from a first electrical conduction path terminal to a second electrical conduction path terminal. The substrate is electrically insulating and may be made of an electrically insulating material for this purpose. The two electrical conduction path terminals can be electrically connected to an electrical voltage or current source, so that in this way the electrical conduction path can be electrically energized. With the aid of the two conductive path terminals, temperature measurement is also possible by measuring the electrical resistance of the conductive path. If the electrical resistance of the thick film material is known as a function of temperature, i.e. the R-T dependence, the instantaneous temperature of the electrical conduction path can be determined. In this way, the proper functioning - especially with regard to the occurrence of excessive temperatures -of the heating device can be monitored.

According to the invention, the conductive path has at least one thick-film conductive path section made of an electrically conductive thick-film material, the at least one thick-film conductive path section extending in a straight line in a plan view of the substrate, i.e. in particular not in a curved manner and in particular not curved and in particular without kinks.

Preferably, no thick-film conductive path section is provided with non-rectilinear extension. In this way, the formation of undesirable "hot spots" is particularly effectively counteracted.

Expediently, as the thick film material, a material may be used which is known to the person skilled in the art under the designation "ESL29130".

Expediently, a film thickness of the at least one thick film conductive path section is between 20 and 30 micrometers, preferably around 25 micrometers.

According to a preferred embodiment, the heating device comprises an electrical temperature sensor, in particular a PTC or NTC temperature sensor, arranged on the substrate for determining an instantaneous temperature of the electrical conduction path. Thus, an additional monitoring of the temperature of the heating device is possible.

According to a preferred embodiment, the electrical conduction path has at least one non-thick-film conduction path section in which the electrical conduction path is formed from an electrically conductive non-thick-film material different from a thick-film material. Preferably, the non-thick film material may be a silver-palladium conducter, which is known to the person skilled in the art under the designation "ESL9695".

In this way, an electric power path with a large number of thick film conductive path sections can be realized on the surface of the substrate, so that a high electric heating power is provided overall. In particular, a high heating power per unit area is achieved by means of this embodiment.

Expediently, in the top view of the substrate, the electrical conduction path in the non-thick-film conduction path section can have a straight-line or non-straight-line extension, in particular a curved or curvilinear extension or an extension having a kink or an angle. Also in this way, an electrical power path with a large number of conduction path sections can be realized, so that a high electrical heating power is provided overall.

According to an advantageous further development, all thick-film conduction path sections and all non-thick-film conduction path sections are electrically connected in series with each other. This electrical interconnection variant proves to be particularly easy to manufacture. In addition, the occurrence of even a single "hotspot" is particularly easy to detect, since even a single hotspot causes an increase in the electrical resistance of the entire electrical conduction path. According to an advantageous further development, the electrical conduction path has a meandering geometry at least in sections in the top view of the substrate, whereby the existing thick-film conduction path sections are also straight in this device. Particularly expediently, two adjacent thick-film conductive path sections can each be interconnected by means of a non-thick-film conductive path section extending transversely to the two adjacent thick-film conductive path sections. This variant requires particularly little installation space.

Particularly expediently, at least two thick film conductive path sections and at least two non-thick film conductive path sections may alternate along an extension of the conductive path. In this way, the installation space available on the substrate for the electrical conduction path can be optimally utilized.

According to another advantageous further development, the electrical conduction path has at least two, preferably several, thick-film conduction path sections that are electrically connected in parallel with one another. In this way, a redundancy of thick-film conduction path sections is created, the functional reliability of the electrical heating device is improved, and in the event of a functional failure of one thick-film conduction path section, the electrical current can flow through the electrical conduction path through the parallel-connected further thick-film conduction path section.

Expediently, the electrically parallel-connected thick film conduction path sections may be electrically disposed between at least one first non-thick film conduction path section and at least one second non-thick film conduction path section. This variant makes optimal use of the available installation space on the substrate. Expediently, the at least two thick film conduction path sections may each have a longitudinal geometry when viewed from above the substrate and may each extend along a longitudinal direction, preferably a common longitudinal direction, and may be spaced apart from one another transversely to the longitudinal direction.

According to another preferred embodiment, at least one thick-film conductive path section has, in the plan view of the substrate, the geometry of a rectangle with two mutually opposite narrow sides and two mutually opposite broad sides, In this embodiment, the thick-film conductive path section merges at the two narrow sides or broad sides in each case into a non-thick-film conductive path section. Particularly expediently, a ratio of the length of the broad sides to the length of the narrow sides is at most 3:1, preferably at most 2:1, most preferably 1.5:1. In this way, a two-dimensional and thus homogeneous heating of electrical conduction path or of the substrate and thus of the electrical heating device is achieved.

Expediently, the electrical resistance of the thick-film material increases with increasing temperature of the thick-film material.

In a particularly preferred embodiment, the non-thick film material may be a PTC material. Such a PTC material has a self-regulating effect in the manner of a control loop, i.e., due to the increasing electrical resistance with increasing temperature, the electrical current through the PTC material decreases so that the temperature of the PTC material does not increase indefinitely.

Particularly conveniently, the substrate may have a T-shaped geometry in plan view with a T-base and a T-roof. Here, the two electrical conduction path terminals are arranged in an area of the T-base facing away from the T-roof, and the at least one thick-film conduction path section is arranged in the T-roof. This variant requires little installation space and, in particular, allows a simple electrical connection of the electrical conduction path an electrical voltage source or electrical current source.

Particularly preferably, the temperature sensor extends along the T-base. In this way, the temperature in a central area of the heating device can be determined.

Expediently, the temperature sensor may have first and second sensor terminals and comprise an electrical conduction path of an electrically conductive PTC material electrically connecting the first sensor terminal to the second sensor terminal. Thus, the instantaneous temperature of the heater can be determined by determining the electrical resistance of this conductive path given a known resistance-temperature relationship.

Particularly expediently, the first and second sensor connections can both be arranged between the two line path connections. Also this variant allows a space saving electrical connection of the temperature sensor to a device for determining the temperature.

The invention further relates to an electric vehicle with a purely electric drive and a heating device explained above. The advantages of the heating device according to the invention explained above therefore also apply to the electric vehicle according to the invention.

Further important features and advantages of the invention will be apparent from the subclaims, from the drawing and from the accompanying figure description based on the drawings.

It is understood that the features mentioned above and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, schematically in each case:

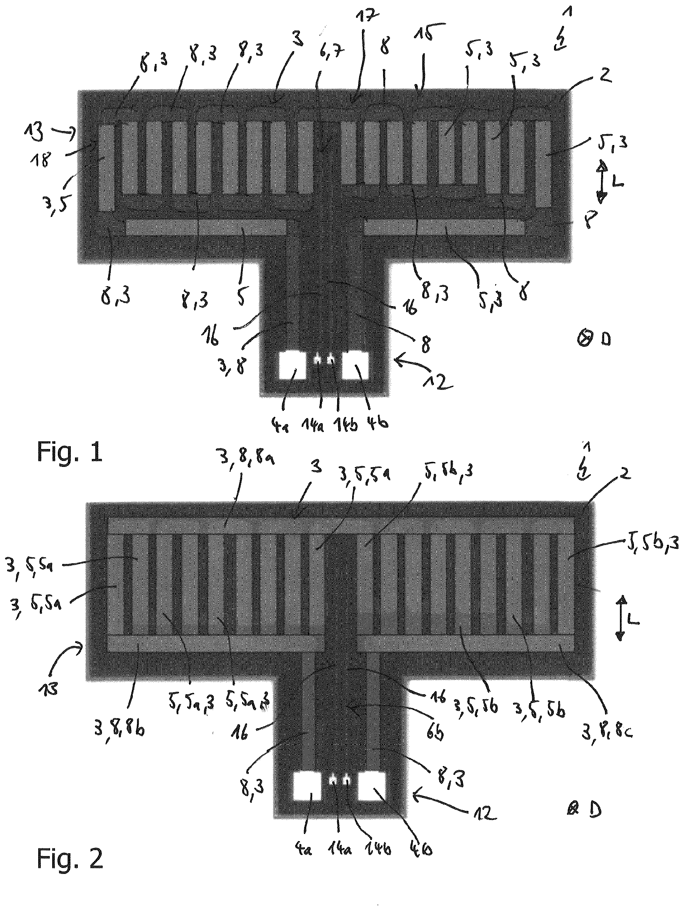

- Figs. 1 to 5:: various exemplary design variants of the heating device according to the invention, in each case in a top view of the substrate.

Figure 1 illustrates an example of an electrical heating device 1 according to the invention. The heating device 1 comprises a substrate 2 made of an electrically insulating material, on which an electrical conduction path 3 is arranged. Figure 1 shows the heating device 1 in a top view D of an upper side 15 of the substrate 2. The electrical conduction path 3 extends from a first electrical conduction path terminal 4a to a second electrical conduction path terminal 4b.

In the example of Figure 1, the electrical conduction path 3 comprises a plurality of thick film conduction path sections 5 in which it is formed of an electrically conductive thick film material DFM. Thereby, the electrical resistance of the thick film material increases with increasing temperature of the thick film material DFM.

In the top view shown, the substrate 2 has a T-shaped geometry with a T-base 12 and a T-roof 13, with the T-base opening into the T-roof 13 at one end in the center. The two electrical conduction path terminals 4a, 4b are arranged in an region 18 of the T-base 12 facing away from the T-roof 13.

As can be seen from Figure 1, all of the thick film conduction path sections 5 extend in a straight line in the top view of the substrate 2 shown. In contrast, no thick film conduction path sections with non-straight line extension are provided.

In addition, the electrical conduction path 3 has a plurality of non-thick film conduction path portions 8 in which the electrical conduction path 5 is formed of an electrically conductive non-thick film material N-DFM different from the thick film material DFM. In the top view D of the substrate 2 shown, the electrical conduction path 5 has a meandering geometry in a main section 17, which is located in the region of the T-roof 13. Thus, the thick film conduction path sections 5 and also the non-thick film conduction path sections 8 are arranged in the T-roof 13. In the top view D of the substrate 2 shown, the electrical conduction path 3 in the non-thick-film conduction path section 8 can each have a contour with a kink or an angle as shown. However, it is also possible in principle - in an analogous manner to the thick-film conduction path sections 5 - to have a straight-line contour course in each case (not shown). Instead of a non-rectilinear contour with the angle or kink shown, a non-rectilinear, in particular curved or curvilinear contour (not shown in Figure 1) is also conceivable in the non-thick-film conduction path sections 8.

In the example of Figure 1, the thick-film conductive path sections 5 and the non-thick-film conductive path sections 8 alternate along the extension of the electrical conductive path 3 between the two electrical conductive path terminals 4a, 4b. All thick-film conduction path sections 5 and all non-thick-film conduction path sections 8 of conduction path 3 are thereby electrically connected in series with each other.

In the plan view D of the substrate 2, the thick-film conductive path sections 5 each have a longitudinal geometry and each extend along a common longitudinal direction L. Furthermore, the thick-film conductive path sections 5 are arranged side by side at a distance transverse to the longitudinal direction L. The non-thick-film conductive path sections 8 also have a longitudinal geometry, each non-thick-film conductive path section 8 interconnecting two adjacent thick-film conductive path sections 5. The thick-film conduction path sections 5 and the non-thick-film conduction path sections 8 preferably have the same path width - measured transversely to a flow direction of the electrical charge carriers through the electrical conduction path 3.

As Figure 1 further illustrates, an electrical temperature sensor 6, for example a PTC temperature sensor 7, may be arranged on the substrate 2 for determining an instantaneous temperature of the electrical conduction path 3 or the substrate 2. The temperature sensor 6 has a first sensor terminal 14a and a second sensor terminal 14b and comprises an electrical conduction path 16 made of an electrically conductive PTC material, which electrically connects the first sensor terminal 14a to the second sensor terminal 14b. To save installation space, the first and second sensor terminals 14a, 14b are arranged between the two conduction path terminals 4a, 4b in the top view D of the substrate 2 shown.

Figure 2 shows a variant of the example of Figure 1, in which the electrical conduction path is realized in an electrical parallel circuit in contrast to the example of Figure 1. This means that the electrical conduction path 3 has several thick-film conduction path sections 5 which are electrically connected in parallel with each other.

In the example of figure 2, first thick film conduction path sections 5a, 5 electrically connected in parallel with each other are electrically arranged between a first non-thick film conduction path electrical section 8a and a second non-thick film conduction path electrical section 8, 8b. Furthermore, second thick film conduction sections 5b, 5 electrically connected in parallel with each other are electrically arranged between the first non-thick film conduction path electrical section 8, 8a and a third non-thick film conduction path electrical section 8, 8c. Compared with the example of Figure 1, this variant has increased operational stability, since in the event of damage to a single thick-film conduction path section 5, this can be electrically bridged via the remaining thick-film conduction path sections 5, so that a complete electrical interruption of the electrical conduction path 3 and an associated functional failure of the heating device 1 is prevented.

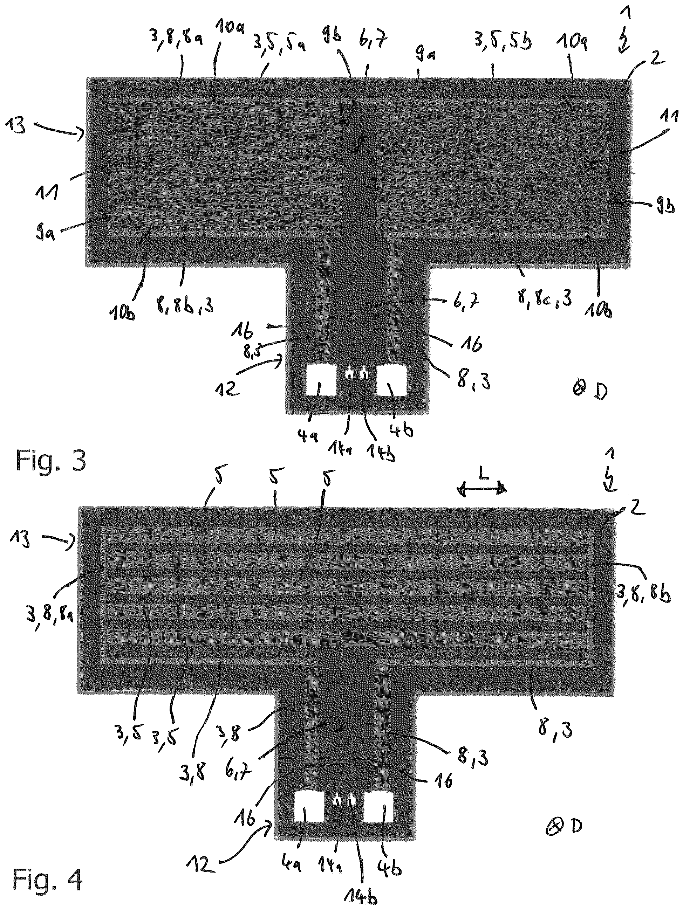

Figure 3 illustrates a variant of Figure 2 with exactly one first thick-film conduction path section 5, 5a and exactly one second thick-film conduction path section 5. Contrary to the example of the variant of Figure 2, however, the two thick-film conductive path sections 5 are not longitudinally formed as in the example of Figures 1 and 2, but have, in the plan view D of the substrate 2, the geometry of a rectangle 11 with two mutually opposite narrow sides 9a, 9b and two mutually opposite broad sides 10a, 10b, the thick-film conductive path section 5 merging at the two narrow sides 9a, 9b or broad sides 10a, 10b in each case into one of the non-thick-film conductive path sections 8 mentioned. Expediently, a ratio of the length of the broad sides 10a, 10b to the length of the narrow sides 9a, 9b is at most 3:1, preferably at most 2:1, most preferably 1.5:1. Particularly preferably, the two rectangular thick-film conduction path sections 5 cover at least 80%, preferably at least 90%, of the upper side 15 of the substrate 2. In this way, a particularly homogeneous delivery of heating power from the upper side 15 of the substrate 2 is achieved.

In a simplified variant of Figure 2 shown in Figure 4, the subdivision into first and second thick-film conduction path sections 5a, 5b can be dispensed with, so that all longitudinal thick-film conduction path sections 5 extend electrically in parallel in each case along the common longitudinal direction L between a first and a second non-thick-film conduction path section 8a, 8b and are thereby arranged transversely to the longitudinal direction L at a distance from one another, as is also the case in the example of Figures 1 and 2.

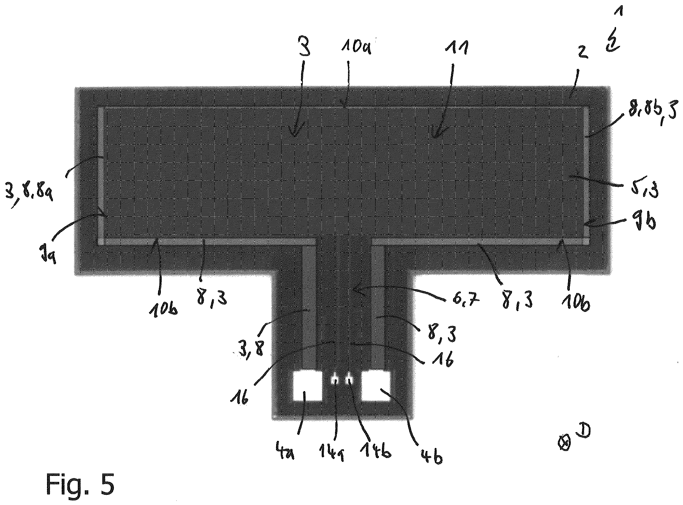

Figure 5 shows a simplified variant of the examples of Figures 3 and 4 with only one thick-film conduction path section 5 with the geometry of a rectangle, so that the realization of an electrical parallel circuit as in the example of Figures 2 and 3 is omitted. This variant also enables a flat and homogeneous delivery of heating power. The variant of figure 5 is technically simpler to manufacture than that of figure 4, but due to the absence of parallel connection of two thick-film conduction path sections 5, it does not have the redundancy present in the example of figure 4 and is thus more prone to malfunction.

## Claims

1. Electric heating device (1),
comprising a substrate (2) on which an electrical conduction path (3) is arranged, which extends from a first electrical conduction path terminal (4a) to a second electrical conduction path terminal (4b), the conduction path (3) being formed from an electrically conductive thick-film material (DFM) at least in a thick-film conduction path section (5), the at least one thick-film conduction path section (5) extending rectilinearly in a plan view of the substrate (2).

2. Heating device according to claim 1,
**characterized in that**
no thick film conduction path sections (3) with non-rectilinear extension are provided.

3. Heating device according to claim 1 or 2,
**characterized in that**
at least one electrical temperature sensor (6), in particular at least one PTC or NTC temperature sensor (7) is arranged on the substrate (2) for determining an instantaneous temperature of the electrical conduction path (3).

4. Heating device according to one of claims 1 to 3,
**characterized in that**
the electrical conduction path (3) has at least one non-thick-film conduction path section (8), in which the electrical conduction path (5) is formed of a non-thick-film material (N-DFM) that is different from the thick-film material (DFM) and electrically conductive.

5. Heating device according to any of the preceding claims,
**characterized in that**
the electrical conduction path (3) in the non-thick-film conduction path section (8) has, in the plan view (D) of the substrate (2), a rectilinear or non-rectilinear, in particular curved or curvilinear or having a kink or an angle, extension in the non-thick-film conduction path section (8).

6. Heating device according to one of the preceding claims,
**characterized in that**
all thick film conduction path sections (5) and all non-thick film conduction path sections (8) are electrically connected in series with each other.

7. Heating device according to any of the preceding claims,
**characterized in that**
in the top view (D) of the substrate (2), the electrical conduction path (5) has, at least in sections, a meandering geometry.

8. Heating device according to one of the preceding claims,
**characterized in that**
along an extension of the conduction path (3), at least two thick-film conduction path sections (5) and at least two non-thick-film conduction path sections (9) alternate.

9. Heating device according to any one of the preceding claims except claim 6,
**characterized in that**
the electrical conduction path (3) comprises at least two, preferably several, thick-film conduction path sections (5) which are electrically connected in parallel with each other.

10. Heating device according to claim 9,
**characterized in that**
the thick film conduction path sections (5) electrically connected in parallel are electrically arranged between at least one first non-thick film conduction path section (8a) and at least one second non-thick film conduction path section (8b).

11. Heating device according to any one of the preceding claims,
**characterized in that**
the at least two thick-film conduction sections (5) each have a longitudinal geometry in the plan view (D) of the substrate (2) and each extend along a, preferably common, longitudinal direction (L) and are arranged transversely to the longitudinal direction (L) at a distance next to each other.

12. Heating device according to one of the preceding claims,
**characterized in that**
at least one thick-film conduction path section (5) has, in the plan view (D) of the substrate, the geometry of a rectangle (11) with two mutually opposite narrow sides (9a, 9b) and two mutually opposite broad sides (10a, 10b),
wherein the thick film conductive path section (5) merges into a non-thick film conductive path section at the two narrow sides or broad sides, respectively,
wherein a ratio of the length of the broad sides to the length of the narrow sides is at most 3:1, preferably at most 2:1, most preferably 1.5:1.

13. Heating device according to any one of the preceding claims,
**characterized in that**
the electrical resistance of the thick film material increases with increasing temperature of the thick film material (DF-M).

14. Heating device according to any of the preceding claims,
**characterized in that**
the substrate (2) has a T-shaped geometry in plan view with a T-base (12) and a T-roof (13); and that
the two electrical conduction path terminals (4a, 4b) are arranged in a region (18) of the T-base (12) facing away from the T-roof (13), and the at least one thick film conduction path section (5) is arranged in the T-roof (13).

15. Heating device according to any one of claims 3 to 14,
**characterized in that**
the at least one temperature sensor (6) extends along the T-base (12).

16. Heating device according to any one of claims 3 to 15,
**characterized in that**
the temperature sensor (6) has a first and a second sensor connection (13a, 14b), both of which are arranged between the two conduction path terminals (4a, 4b).

17. Heating device according to any of claims 3 to 16,
**characterized in that**
the one temperature sensor (6) has through a first and a second sensor port (14a, 14b) and comprises an electrical conduction path (16) of an electrically conductive PTC material electrically connecting the first sensor port to the second sensor port.

18. Electric vehicle comprising at least one electrical heating device according to any one of the preceding claims.
